# EUROPÄISCHE PATENTSCHRIFT

(11) **EP 2 307 272 B1**
(45) Veröffentlichungstag und Bekanntmachung des Hinweises auf die Patenterteilung: **09.01.2013**
(21) Anmeldenummer: 09779891.2
(22) Anmeldetag: 23.06.2009
(51) Int. Cl.: B64C 1/06, B21J 15/14, B64C 1/10, B64F 5/00

(54) **VERFAHREN ZUR MONTAGE EINES KALOTTENFÖRMIGEN DRUCKSCHOTTS IN EINER HECKSEKTION EINES FLUGZEUGS SOWIE VORRICHTUNG ZUR DURCHFÜHRUNG DES VERFAHRENS**
METHOD FOR INSTALLING A DOME-SHAPED PRESSURE BULKHEAD IN A REAR SECTION OF AN AIRCRAFT, AND DEVICE FOR CARRYING OUT THE METHOD
PROCÉDÉ DE MONTAGE D'UNE CLOISON DE PRESSURISATION EN FORME DE DÔME DANS UNE PARTIE ARRIÈRE D'UN AVION ET DISPOSITIF DESTINÉ À LA RÉALISATION DE CE PROCÉDÉ

(30) Priorität: 07.07.2008 DE 102008040213; 07.07.2008 US 134141
(43) Veröffentlichungstag der Anmeldung: 13.04.2011
(73) Patentinhaber: Airbus Operations GmbH, 21129 Hamburg (DE)
(72) Erfinder: WEBER, Frank, 21635 Jork (DE); SCHÖNFELDT, Olaf, 25358 Hohenfelde (DE)
(74) Vertreter: Isarpatent
(86) Internationale Anmeldenummer: PCT/EP2009/057812
(87) Internationale Veröffentlichungsnummer: WO 2010/003818

(56) Entgegenhaltungen:
- GB-A- 2 196 922
- US-A- 5 934 616
- US-A1- 2002 007 548
- US-A1- 2006 284 047

## Beschreibung

Die Erfindung betrifft ein Verfahren zur Montage eines insbesondere kalottenförmigen Druckschotts an einer einstückigen, im Wesentlichen konischen Hecksektion für ein Flugzeug, wobei die Hecksektion einen Anschlussbereich und einen Endbereich aufweist.

Darüber hinaus betrifft die Erfindung eine Vorrichtung zur Durchführung des Verfahrens.

Die US 5,934,616 A beschreicht einem Druchspant in Form einer Kalotte zum heckeistigen Abschluss eines druckbelüfteten Innenbereiches eines Flugzeugrumpfes, wobei zur Aufnahme von Ringkräften ein Ringspant vorgesehen ist, welcher derart durch den Rand der Kalotte gebildet wird, dass der Rand mit einem Übergangsbereich mit dem inneren Krümmungsradius in einem spitzen Winkel so zum Rumpf hin umgestülpt ist, dass er sich von innen an die Rumpfstruktur in einem umlaufenden Kontaktstreifen mit vorbestimmter Breite anschmiegt.

Hecksektionen für Flugzeuge werden heutzutage üblicherweise mit mindestens zwei Schalen hergestellt. Um die geforderte Druckdichtigkeit der Hugzeugrumpfzette zu erreichten, sind die Hecksektionen nach hintern hin mit einem zumeist kalottenförmigen Druckschott abgeschlossen. Im Fall der klassischen Schalenbauweise wird die herzustellende Hecksektion durch das sukzessive Anfügen von Hecksektionsschalen an das in der Regel während der Montage senkrecht stehende Druckschott gebildet. Infolge der zirkulären Anfügung der Schalensegmente an den Anschlussbereich des Druckschotts zur Herstellung der Hecksektion kann auf einfache Weise ein Toleranzausgleich erfolgen, um fertigungstechnisch unvermeidbare Maßabweichungen des Druckschotts bzw. des Anschlussbereichs der Hecksektion zu kompensieren.

Zur Erzielung weiterer Gewichtseinsparungen werden im modernen Flugzeugbau zunehmend Verbundwerkstoffe, insbesondere CFK-Materialien, für die Fertigung der Hecksektion und anderer wesentlicher Strukturkomponenten eingesetzt. Um das Gewichtseinsparungspotenzial der Kernverbundmaterialien durch eine Verringerung der Anzahl der Verbindungsnähte weiter zu erhöhen, wird zunehmend von der bekannten Schalenbauweise Abstand genommen. Stattdessen werden zum Beispiel vollständige Hecksektionen einstückig im Wickelverfahren oder in einem TFP-Legeprozess aus CFK-Materialien hergestellt.

Aufgrund der einstückigen Ausbildung der Hecksektion ist jedoch ein Toleranzausgleich, wie er bisher bei der Schalenbauweise erfolgte, bei der Integration eines Druckschotts in eine CFK-Hecksektion nicht mehr möglich. Ferner gestaltet sich der Einbau eines senkrecht stehenden Druckschotts fertigungstechnisch aufwändig, da sich unter anderem unterschiedliche Arbeitshöhen in Abhängigkeit von der Umfangsposition an der Rumpfsektion ergeben.

Aufgabe der Erfindung ist es, ein in fertigungstechnischer Hinsicht einfaches Verfahren zu schaffen, das eine Integration eines Druckschotts in eine vorgefertigte, bereits ausgehärtete einstückige Hecksektion für eine druckdichte Flugzeugrumpfzelle mit Toleranzausgleich ermöglicht. Darüber hinaus ist es Aufgabe der Erfindung, eine Vorrichtung zur Durchführung des Verfahrens bereit zu stellen.

Diese Aufgabe wird zunächst durch ein Verfahren nach Maßgabe des Patentanspruchs 1, umfassend die folgenden Verfahrensschritte, gelöst:
a) waagerechte Aufnahme einer vorgefertigten Hecksektion in einer Horizontalablage,
b) Einbringen der Hecksektion in einen Schwenkrahmen,
c) Verschwenken der Hecksektion mittels des Schwenkrahmens in eine senkrechte Position, wobei der Anschlussbereich der Hecksektion nach oben weist,
d) waagerechtes Auflegen und Zentrieren des Druckschotts auf dem Anschlussbereich, und
e) Zusammenfügen des Druckschotts mit der Hecksektion im Bereich des Anschlussbereichs.

Im Verfahrensschritt a) wird eine vorgefertigte Hecksektion in einer Horizontalablage (so genannte Pallung) in einer Vormontagestation aufgenommen. Hierbei handelt es sich vorzugsweise um eine einstückig mit einem CFK-Material gefertigte Hecksektion, die den hinteren Abschluss der Flugzeugrumpfzelle bildet. Während die Hecksektion in der Horizontalablage gehalten ist, können zusätzliche Montagearbeiten an der Hecksektion, wie zum Beispiel die Befestigung von Beschlägen zur Anbindung des Seitenleitwerks und/oder des Höhenleitwerks an der Hecksektion vorgenommen werden. Hierfür erforderliche Bohrungen werden mittels einer geeigneten Bohreinrichtung mit hoher Genauigkeit eingebracht. Die Bohreinrichtung im Bereich der Vormontagestation kann beispielsweise mit einem bekannten Knickarmroboter mit mindestens sechs Freiheitsgraden gebildet sein, an dessen Knickarm das Bohrwerkzeug angeordnet ist. Darüber hinaus ist es denkbar, weitere Arbeitsschritte an der Hecksektion, wie beispielsweise die Vorausrüstung mit den erforderlichen Leitungssystemen oder dergleichen, vorzunehmen, da nach der Integration des kalottenförmigen Druckschotts die Zugänglichkeit zum Innenraum der Hecksektion erschwert ist. Die Verbringung der vorgefertigten Hecksektion in die horizontale Ablage erfolgt mittels einer geeigneten Hebeeinrichtung, beispielsweise mittels eines Deckenkrans.
Im Verfahrensschritt b) wird die derart vorbereitete Hecksektion mittels der Hebeeinrichtung in einen Schwenkrahmen innerhalb einer Fügestation verbracht. Hierbei befindet sich der Schwenkrahmen und damit die Hecksektion zunächst noch in einer horizontalen Position. In dieser waagerechten Stellung können beispielsweise weitere Bohrarbeiten vorgenommen werden. In diesem Zusammenhang ist zum Beispiel die Einbringung von Bohrungen mit hoher Genauigkeit in die im Verfahrensschritt a) angebrachten Seitenleitwerksbeschläge zu nennen. Die Bohreinrichtung innerhalb der Fügestation ist bevorzugt als eine Portalbohreinrichtung ausgeführt, die oberhalb des Schwenkrahmens oder alternativ auch unterhalb des Schwenkrahmens verschiebbar angeordnet ist. Die Portalbohreinrichtung ist vorzugsweise auf mindestens zwei parallel zueinander verlaufenden Schienen geführt und mit hoher Genauigkeit positionierbar. Mittels der Portalbohreinrichtung ist es möglich, ein Borwerkzeug in allen drei Richtungen des Raumes mit hoher Genauigkeit zu positionieren. Anschließend wird die Hecksektion in der Fügestation mit Hilfe des Schwenkrahmens in eine senkrechte Position gebracht, so dass ein Anschlussbereich bzw. ein Anschlussquerschnitt der Hecksektion, mit dem das Druckschott verbunden wird, nach oben weist, während ein Endabschnitt der konischen Hecksektion mit in der Regel deutlich geringeren Querschnittsabmessungen nach unten gerichtet ist. Der Schwenkrahmen kann darüber hinaus so ausgebildet sein, dass zusätzlich eine Rotation der Hecksektion um die Längsachse möglich ist. Infolge der waagerechten Montageposition des Druckschotts vereinfacht sich zum einen der Montageprozess, da die Arbeitshöhe stets unabhängig von der jeweiligen Umfangsposition der vorzunehmenden Fügearbeiten an der Hecksektion ist. Darüber hinaus wird eine schwerkraftbedingte Eigendeformation der Querschnittsgeometrie der Hecksektion vermieden und das bevorzugt selbstzentrierend ausgebildete Druckschott kann auf einfache Weise "schwimmend" innerhalb des Anschlussbereichs der Hecksektion eingelegt und positioniert werden.
Zur späteren Befestigung des Druckschotts wird im Schritt c) vorab eine mit mindestens zwei Segmenten gebildete Querstoßlasche im Anschlussbereich der Hecksektion montiert, wobei sich die Hecksektion in der senkrechten Position befindet. Die Befestigung der Querstoßlasche erfolgt vorzugsweise durch Vernieten oder Verschrauben. Alternativ können beliebige andere Fügeverfahren, wie zum Beispiel Schweißen, Pressen oder Kleben zum Einsatz kommen.
Erst im Verfahrensschritt d) wird das Druckschott in einer im Wesentlichen waagerechten Position auf den Anschlussbereich mit der umlaufenden Querstoßlasche aufgelegt und ausgerichtet, wobei sich die eingangs erwähnten fertigungstechnischen Vorteile ergeben. Zur Beschleunigung der Durchlaufzeiten wurde das Druckschott in einem separaten Druckschottbauplatz zumindest abschnittsweise mit einem umlaufenden Randwinkel zur späteren mechanischen Anbindung des Druckschotts versehen. Der Randwinkel ist entsprechend zum Ringspant mit mindestens zwei miteinander verbundenen Randwinkelsegmenten gebildet. Der Begriff der Ausrichtung bedeutet in diesem Kontext die Vermittlung bzw. die Zentrierung des Druckschotts in Bezug auf den Anschlussbereich der Hecksektion.
Im Verfahrensschritt e) erfolgt die Verbindung des Druckschotts mit der Hecksektion im Anschlussbereich gleichfalls in waagerechter Position. Hierbei wird auf das eingepasste Druckschott ein in einem Ringspantbauplatz vorgefertigter Ringspant aufgesetzt und positioniert bzw. ausgerichtet.
Abschließend erfolgt die Herstelllung der noch notwendigen Verbindungen zwischen dem Ringspant, dem Druckschott (Randwinkel) und der Querstoßlasche innerhalb des Anschlussbereichs der Hecksektion durch Nieten, Schrauben, Pressen, Kleben oder dergleichen, wobei zugleich Dichtungsmittel zur druckdichten Versiegelung zwischen dem Druckschott und der Hecksektion eingebracht werden.

Nach einer vorteilhaften Fortbildung des Verfahrens ist vorgesehen, dass, nachdem die Aufnahme der Hecksektion in der Horizontalablage erfolgt ist, mindestens ein Beschlag, insbesondere ein Seitenleitwerksbeschlag, an der Hecksektion befestigt wird.
Hierdurch erlaubt das Verfahren über die bloße Integration des Druckschotts hinaus die Ausrüstung der Hecksektion mit weiteren Strukturkomponenten. Derartige Strukturkomponenten sind zum Beispiel die Seitenleitwerksbeschläge, Beschläge für die Anbindung des Höhenleitwerks an die Hecksektion sowie Befestigungsorgane für eine alternative elektrische Energieversorgungseinheit des Flugzeugs innerhalb der Hecksektion (so genannte "auxilary power unit" bzw. APU). Ferner können Leitungen für die erforderliche Infrastruktur des Flugzeugs, wie zum Beispiel elektrische Leitungen, hydraulische Leitungen, Wasser- und Abwasserleitungen sowie Klimatisierungs- und Belüftungsleitungen zumindest vormontiert werden. Die Vormontage dieser Komponenten ist vorteilhaft in diesem Verfahrensschritt vorzunehmen, da insbesondere zum Innenraum der Hecksektion aufgrund des noch nicht integrierten Druckschotts eine gute Zugänglichkeit gegeben ist.

Eine weitere Ausgestaltung des Verfahrens sieht vor, dass der im Quernahtbereich zur Befestigung des Druckschotts erforderliche Ringspant in einem Ringspantbauplatz vormontiert wird.
Dieser Ringspantbauplatz kann extern angelegt sein oder alternativ auch innerhalb der zur Durchführung des Verfahrens benutzten Vorrichtung angeordnet sein. Insbesondere durch eine interne Anordnung des Ringspantbauplatzes ergibt sich eine weitere Effizienzsteigerung bei der Durchführung des Verfahrens, da eine hohe zeitliche Parallelisierung des Fertigungsprozesses und zugleich kurze Transportwege erreicht werden. Vorzugsweise ist die Integration des Ringspants spätestens zu dem Zeitpunkt abgeschlossen, indem die Rumpfsektion von der waagerechten Vormontageposition in der Horizontalablage in den Schwenkrahmen innerhalb der Fügestation transferiert wird und zur Integration des Druckschotts hinreichend vorbereitet ist.

Die Integration des Ringspants innerhalb des externen oder internen Ringspantbauplatzes erfolgt bevorzugt ebenfalls in einer horizontalen Position in einer Auflagevorrichtung, die eine präzise Positionierung, Vermessung und gegebenenfalls auch einen Toleranzausgleich zwischen den zusammen zufügenden Ringspantsegmenten erlaubt, um eine optimale Passgenauigkeit zum Anschlussbereich der Hecksektion zu erreichen, die jegliche Ausgleichsmaßnahmen entbehrlich macht (so genanntes "shim"-freies Zusammenfügen).

Nach Maßgabe einer weiteren Fortbildung ist vorgesehen, auch das Druckschott in einem Druckschottbauplatz vorzumontieren, das heißt randseitig über den gesamten Umfang hinweg mit einem aus mehreren Randwinkelsegmenten zusammengesetzten Randwinkel zu verbinden.
Hierdurch ist gleichfalls eine hohe zeitliche Parallelisierung des Verfahrens und damit eine geringe Durchlaufzeit der Hecksektion bis zur vollständigen Integration des Druckschotts gegeben. Während der Befestigung des Randwinkels befindet sich das Druckschott entsprechend dem Ringspant in einer geeigneten Auflagevorrichtung in einer horizontalen Position.

Ferner wird die erfindungsgemäße Aufgabe durch eine Vorrichtung zur Durchführung des Verfahrens nach Maßgabe des Patentanspruchs 11 gelöst, wobei die Vorrichtung folgende Merkmale umfasst:
a) mindestens einen Vormontageplatz mit mindestens einer Horizontalablage sowie mindestens eine Fügestation mit mindestens einem Schwenkrahmen,
b) mindestens eine Bohreinrichtung, insbesondere mindestens eine Portalbohreinrichtung, und
c) mindestens einen Druckschottbauplatz.

In der horizontalen Aufnahme des Vormontageplatzes wird eine angelieferte Hecksektion zunächst gelagert, um gegebenenfalls erforderliche Ausrüstungsarbeiten durchzuführen. Ein Beispiel hierfür ist das Einbringen von Befestigungsbohrungen für die Seitenleitwerksbeschläge oder die Höhenleitwerksbeschläge und das anschließende Befestigen der Beschläge durch Nieten oder Schrauben. Zu diesem Zweck verfügt der Vormontageplatz beispielsweise über einen Knickarmroboter, an dessen Knickarm eine geeignete Bohreinrichtung befestigt ist. Weiterhin kann innerhalb des Montageplatzes eine voll automatische Nieteinrichtung vorgesehen sein.
Daneben verfügt die Vorrichtung über mindestens eine Fügestation mit einem Schwenkrahmen, in dem die Integration des Druckschotts vollzogen wird. Die Fügestation ist darüber hinaus mit einer hochgenauen Bohreinrichtung ausgestattet, bei der es sich beispielsweise um eine parallel verschiebbare Portalbohreinrichtung handeln kann. Bevorzugt verfügt die Fügestation zugleich über eine vollautomatische Nieteinrichtung. Mittels der Portalbohreinrichtung können beispielsweise Befestigungsbohrungen in die innerhalb des Vormontageplatzes befestigten Seitenleitwerksbeschläge und Höhenleitwerksbeschläge mit hoher Präzision eingebracht werden.
Ferner weist die Vorrichtung mindestens einen Druckschottbauplatz und mindestens einen externen oder internen Ringspantbauplatz auf. Innerhalb des Druckschottbauplatzes wird ein extern zugeführtes Druckschott zunächst in einer geeigneten Aufnahme bzw. Pallung horizontal gelagert und anschließend mit einem umlaufenden Randwinkel versehen. Im Ringspantbauplatz erfolgt zeitgleich hierzu die Integration eines für die Befestigung des Druckschotts erforderlichen Ringspants. Zusätzlich kann der Druckschottbauplatz auch Einrichtungen zur Herstellung des Druckschotts mit CFK-Materialien im Wickelverfahren bzw. im TFP-Legeprozess aufweisen. Sowohl der Vormontageplatz, der Druckschottbauplatz, die Fügestation als auch der Ringspantbauplatz können mit kombinierten Bohr-und Nietautomaten als Fügeeinrichtungen ausgestattet sein.
Der Ringspantbauplatz ist bevorzugt außerhalb der Montagelinie bzw. der gesamten Vorrichtung angeordnet, kann in einer alternativen Ausgestaltung aber auch innerhalb der Vorrichtung (s.g. interner Ringspantbauplatz) vorgesehen sein. Im Ringspantbauplatz wird der Ringspant mit mehreren Ringspantsegmenten, die gleichfalls in einer geeigneten horizontalen Aufnahme gelagert und aufgenommen sind, zusammen gefügt.
Während des verfahrensgemäßen Ablaufs wird die Rumpfsektion mittels einer geeigneten Hebeeinrichtung vom Vormontageplatz in den Schwenkrahmen der Fügestation transferiert. Die Hebeeinrichtung, die beispielsweise als ein konventioneller Deckenkran ausgestaltet sein kann, ermöglicht eine freie Positionierung der Hecksektion im Raum, wobei der Vormontageplatz, die Fügestation, der Druckschottbauplatz und der Ringspantbauplatz innerhalb des Erfassungsbereichs der Hebeeinrichtung liegen. Der Schwenkrahmen ermöglicht erfindungsgemäß das Verschwenken der Rumpfsektion um eine Querachse in eine senkrechte Position, um die Montage des Druckschotts am Anschlussbereich der Hecksektion zu erleichtern. Ferner kann der Schwenkrahmen derart ausgebildet sein, dass zusätzlich das Verdrehen der Hecksektion um deren Längsachse (d.h. parallel zur Flugzeuglängsachse) möglich ist. Vorzugsweise verfügt die Vorrichtung über jeweils mindestens drei Vormontageplätze, drei Fügeplätze, drei Ringspantbauplätze sowie drei Druckschottbauplätze, um eine ausreichend kurze Durchlaufzeit bei der Druckschottintegration durch zeitliche Parallelisierung zu erzielen. In der Regel ist jedoch die Vorhaltung lediglich einer Hebeeinrichtung und einer Portalbohreinrichtung innerhalb der gesamten Montagevorrichtung ausreichend, während vorzugsweise jeder Vormontageplatz zumindest mit einer automatischen Bohr- und Nieteinrichtung ausgestattet ist.

Weitere vorteilhafte Ausgestaltungen des Verfahrens und der Vorrichtung sind in weiteren Patentansprüchen dargelegt.

In der Zeichnung zeigt:
- **Fig. 1**: eine Querschnittsdarstellung durch einen Anschlussbereich einer Hecksektion mit einer angefügten weiteren Rumpfsektion,
- **Fig. 2**: eine perspektivische Ansicht einer Hecksektion mit einem Druckschott,
- **Fig. 3**: eine perspektivische Ansicht einer Ausführungsvariante einer Vorrichtung, und
- **Fig. 4**: eine Seitenansicht auf eine Fügestation mit einem darin angeordneten Schwenkrahmen zur Lagerung der Hecksektion.

In der Zeichnung weisen dieselben konstruktiven Elemente jeweils die gleiche Bezugsziffer auf.

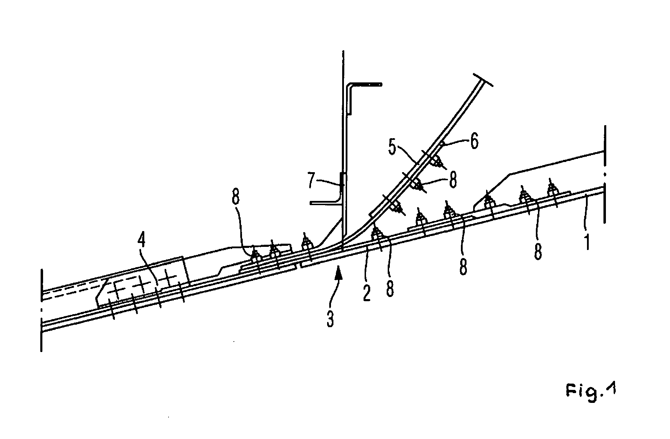

Die **Fig. 1** zeigt eine Schnittdarstellung durch einen Anschlussbereich einer Hecksektion mit einer angefügten weiteren Rumpfsektion.
Eine Hecksektion 1 ist mit einer umlaufenden Querstoßlasche 2 versehen, die einen Anschlussbereich 3 zum Anfügen einer weiteren Rumpfsektion 4 bildet. Der Anschlussbereich 3 kann grundsätzlich jede beliebige, gegebenenfalls auch örtlich variable Krümmungsgeometrie aufweisen, ist vorzugsweise jedoch zumindest abschnittsweise kreisförmig, elliptisch und/oder oval ausgestaltet. Ein im Wesentlichen kalottenförmiges Druckschott 5 ist mit einem umlaufenden Randwinkel 6 versehen. Die eigentliche Verbindung zwischen der Rumpfsektion 4 und der Hecksektion 1 wird durch die Querstoßlasche 2 gebildet. Auf der Querstoßlasche 2 liegt der Randwinkel 6 des Druckschotts 5 sowie ein Ringspant 7 auf, die im Zusammenwirken die mechanische Anbindung des Druckschotts 5 im Anschlussbereich 3 der Hecksektion 1 sicherstellen. Alle genannten Komponenten sind zumindest teilweise untereinander mittels einer Vielzahl von Befestigungselementen, insbesondere mit Nieten 8 oder Schrauben verbunden.

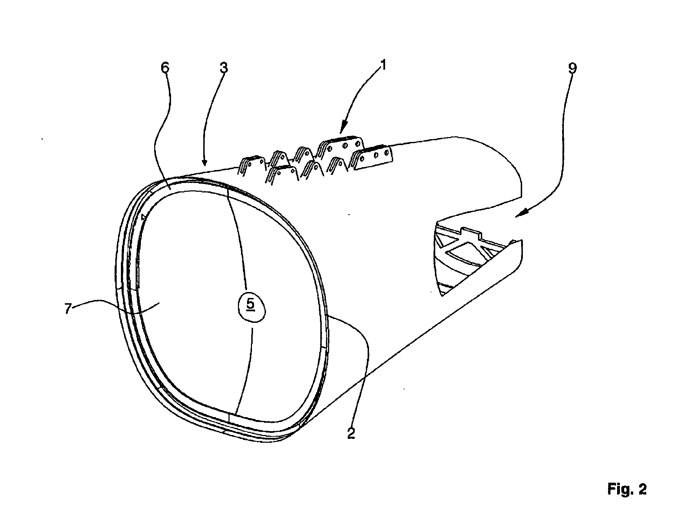

Die **Fig. 2** veranschaulicht eine perspektivische Ansicht der Hecksektion mit dem Druckschott. Der besseren Übersicht wurde ein viertelkreisförmiges Ringspantsegment in der Fig. 2 weggelassen.
Im Anschlussbereich 3 der Hecksektion 1 ist das in etwa kalottenförmige Druckschott 5 montiert. Die mechanische Anbindung des Druckschotts 5 geschieht über den umlaufenden Randwinkel 6, während die Kopplung der Hecksektion 1 an die in Fig. 2 nicht eingezeichnete nachfolgende Rumpfsektion 4 mittels der Querstoßlasche 2 erfolgt. Der Anschlussbereich 3 der Hecksektion 1 verfügt über eine angenähert kreisförmige Querschnittsgeometrie. Eine Querschnittsgeometrie des Endbereichs 9 der Hecksektion 1 entspricht in etwa der des (vorderen) Anschlussbereichs, weist jedoch im Vergleich eine deutlich verringerte Querschnittsfläche auf. Eine O-berflächengeometrie der Hecksektion 1 entspricht somit in etwa der eines Kegelstumpfes bzw. eines Konus.

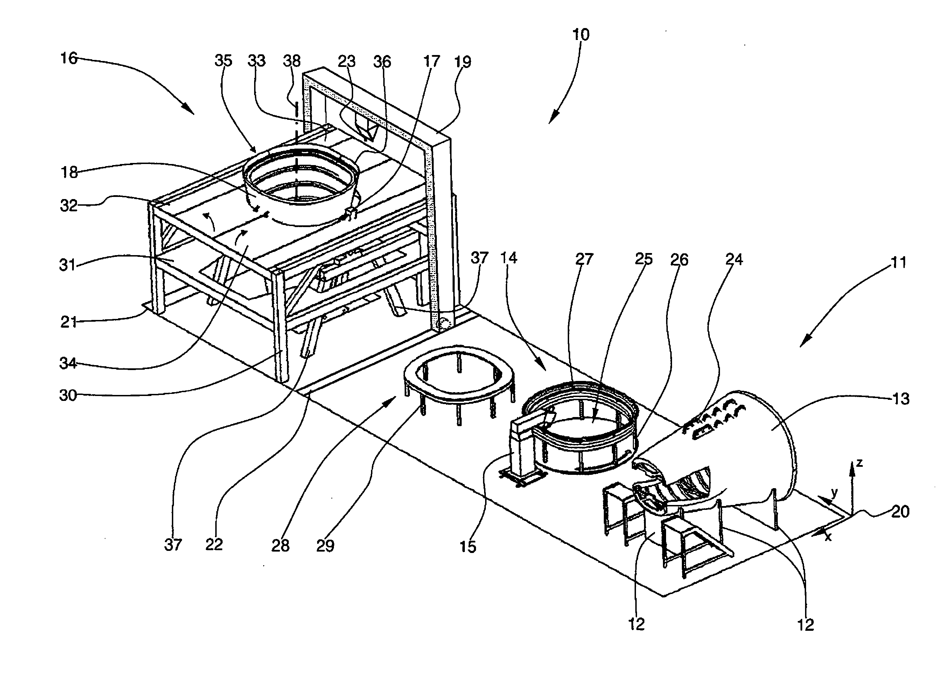

Die **Fig. 3** illustriert eine erste Ausführungsvariante einer Vorrichtung zur Durchführung des erfindungsgemäßen Verfahrens.
Eine Vorrichtung 10 umfasst unter anderem einen Vormontageplatz 11 mit einer Horizontalablage 12 für eine Hecksektion 13 in einer waagerechten Position, einen Druckschottbauplatz 14 mit einer bevorzugt kombinierten Bohr- und Nieteinrichtung 15 sowie eine Fügestation 16 mit einem Schwenkrahmen 17 zur Aufnahme einer weiteren Hecksektion 18 und einer Portalbohreinrichtung 19. Ein Koordinatensystem 20 mit einer x-Achse, einer y-Achse sowie einer z-Achse veranschaulicht die Lage aller Komponenten im Raum.
Die Portalbohreinrichtung 19 ist auf zwei Schienen 21,22 parallel zur x-Achse des Koordinatensystems 20 verschiebbar geführt. Ein an der Portalbohreinrichtung 19 angeordnetes, vorzugweise kombiniertes Bohr- und Niet- und/oder Schraubwerkzeug 23 ist parallel zu allen Achsen des Koordinatensystems 20 frei im Raum positionierbar. Somit lassen sich mittels der Portalbohreinrichtung neben den zur Herstellung der Vernietung erforderlichen Bohrungen zugleich auch die Nieten bzw. gegebenenfalls die Verbindungsschrauben setzen.

Mittels einer in der Fig. 3 nicht dargestellten weiteren, vorzugsweise kombinierten und vollautomatischen Bohr- und Nieteinrichtung können beispielsweise Seitenleitwerksbeschläge 24 an der im Vormontageplatz 11 befindlichen Hecksektion 13 befestigt werden. Ferner können auch Höhenleitwerksbeschläge und/oder Befestigungsorgane für die zusätzliche Energieversorgung ("auxilary power unit") in die Hecksektion 13 eingebaut werden. Darüber hinaus ist es möglich, alle elektrischen und hydraulischen Leitungen einschließlich der benötigten Klimatisierungs-, Wasser- und Abwasserleitungen für die erforderliche Infrastruktur des Flugzeugs in die Hecksektion 13 einzubauen. Vorzugsweise werden an der Hecksektion 13 im Bereich des Vormontageplatzes 11 möglichst sämtliche Vorausrüstungsarbeiten durchgeführt, da die Zugänglichkeit in die Hecksektion 13 nach der Montage des Druckschotts stark eingeschränkt ist. Während der Vorausrüstung befindet sich die Hecksektion 13 in der dargestellten horizontalen Position auf der Horizontalablage 12, die an unterschiedliche Hecksektionen 13 einer Vielzahl von Flugzeugtypen anpassbar ist.
Bevorzugt zeitlich parallel zur Vorausrüstung der Hecksektion 13 erfolgt im Druckschottbauplatz 14 die Vorbereitung des Druckschotts 25 für die Montage. Während der Vormontage des Druckschotts 25 ist dieses in einer horizontalen Lage, das heißt im Wesentlichen parallel zur xy-Ebene des Koordinatensystems 20 auf einem geeigneten Auflager 26 zur Unterstützung abgefangen. Mittels der vorzugsweise gleichfalls kombiniert ausgeführten Bohr- und Nieteinrichtung 15 wird das Druckschott 25 beispielsweise mit einem umlaufenden, mit mindestens zwei Segmenten gebildeten Randwinkel 27 versehen.

Die Vorrichtung 10 verfügt ferner über einen Puffer 28 mit einem weiteren Auflager 29 zur Eintaktung und Zwischenspeicherung eines weiteren, noch nicht vorbereiteten Druckschotts in den Verfahrensprozess. Anstelle des Puffers 28 oder auch zusätzlich kann beispielsweise ein nicht dargestellter Ringspantbauplatz vorgesehen sein, in dem das Zusammenfügen eines im Verbindungsbereich zwischen einer Hecksektion 13 und einer Anschlusssektion in der Regel vorgesehenen Ringspants aus mehreren Ringspantsegmenten mit Ringspantkupplungen gleich innerhalb der Vorrichtung 10 erfolgt. Auch dieser optionale Ringspantbauplatz ist vorzugsweise mit einer vollautomatischen, kombinierten Bohr- und Nieteinrichtung ausgerüstet. Anstelle der Nieteinrichtung kann selbstverständlich auch eine Schraubeinrichtung vorgesehen sein.

Die Fügestation 16 verfügt unter anderem über einen Gestellrahmen 30, der mit zwei bevorzugt parallel zur xy-Ebene verlaufenden Arbeitsebenen 31,32 ausgestaltet ist. Zumindest die obere Arbeitsebene 32 verfügt über zwei Klappen 33,34 mit einem jeweils in etwa halbkreisförmigen Ausschnitt, um das Einführen der Hecksektion 18 von oben in die Fügestation 16 zu ermöglichen. Zu diesem Zweck können die Klappen 33,34 in Richtung der beiden nicht bezeichneten Pfeile nach oben geklappt werden. Ein nicht bezeichneter Abstand zwischen den Arbeitsebenen 31,32 parallel zur z-Achse des Koordinatensystems 20 ist bevorzugt so bemessen, dass sich ein Mitarbeiter aufrecht gehend in diesem Bereich bewegen kann. Alternativ zu der in Fig. 3 illustrierten Ausführungsvariante der Vorrichtung 10 können die Schienen 21,22 zur Führung der Portalbohreinrichtung 19 anstatt auf einer Grundfläche der Vorrichtung 10 auch im Bereich der oberen Arbeitsebene 32 angeordnet sein. Hiervon abweichende räumliche Anordnungen der Schienen 21,22 und der Portalbohreinrichtung 19 bzw. der kombinierten Portalbohr- und Nieteinrichtung 23 sind gleichfalls möglich. Die Klappen 33,34 können mit horizontal verschiebbaren Elementen ausgestattet sein, um ein weitgehend spaltfreies Umfassen der Hecksektion 18 sicher zu stellen.
Mittels des Schwenkrahmens 17 kann die Hecksektion 18 um eine parallel zur y-Achse verlaufende Drehachse in die erfindungsgemäße senkrechte Position für die Integration des Druckschotts verschwenkt bzw. verkippt (quer zur Hecksektionslängsachse) werden. Hierbei weist ein Anschlussbereich 35 der Hecksektion 18 nach oben, während ein Endbereich der Hecksektion 18 nach unten gerichtet ist. In der in Fig. 3 illustrierten senkrechten Montageposition der bereits mit einer umlaufenden Querstoßlasche 36 versehenen Hecksektion 18 wird der Einbau des vorbereiteten Druckschotts 25 vollzogen.
Infolge der senkrechten Montageposition der Hecksektion 18 für die Integration des Druckschotts 25 ergeben sich im Vergleich zur bisherigen Montageweise vereinfachte Arbeitsabläufe, da eine Arbeitshöhe zwischen dem Anschlussbereich 35 und der oberen Arbeitsebene 32 unabhängig von der jeweiligen radialen Arbeitsposition an der Hecksektion 18 ist. Darüber hinaus werden schwerkraftbedingte Änderungen der Querschnittsgeometrie des Anschlussbereichs 35 der Hecksektion 18 vermieden und das mit dem Randwinkel 27 versehene Druckschott 25 kann auf einfache Weise von oben, das heißt parallel zur z-Achse in den Anschlussbereich mittels einer nicht dargestellten Hebeeinrichtung "eingeschwebt" und ausgerichtet werden. Bevorzugt ist das Druckschott 25 so ausgestaltet, dass sich dieses beim Absenken mittels der Hebeeinrichtung innerhalb des Anschlussbereichs 35 der Hecksektion 18 selbsttätig zentriert, das heißt in die endgültige Montageposition ausrichtet.

Zum Einbau wird das im Druckschottbauplatz 14 vorbereitete Druckschott 25 mittels der Hebeeinrichtung, bei der es sich vorzugsweise um einen Decken- bzw. Hallenkran handelt, ausgehend vom Druckschottbauplatz 14 zur Fügestation 16 transferiert, in Bezug zur Hecksektion 18 ausgerichtet und anschließend parallel zur z-Achse abgesenkt. Abschließend wird ein Ringspant gleichfalls mittels der Hebeeinrichtung zur Fügestation 16 transferiert und in Relation zur Hecksektion 18 ausgerichtet und abgesenkt.
Abschließend wird mittels des kombinierten Bohr- und Nietwerkzeugs 23 eine Vielzahl von Bohrungen und Nietverbindungen zwischen dem Randwinkel 27 des Druckschotts 25, der Querstoßlasche 36, dem Ringspant sowie der anzufügenden Rumpfsektion im Anschlussbereich 35 zur Schaffung der erforderlichen Verbindungen hergestellt. Alternativ kann bereits nach dem Ausrichten des vorbereiteten Druckschotts 25 eine zumindest teilweise Verbindung (Heftung) mittels einiger Niet- oder Schraubverbindungen zwischen der Querstoßlasche 36 und dem Randwinkel 27 des Druckschotts 25 zur Lagefixierung erfolgen.

Der Schwenkrahmen 17 ist innerhalb des Gestellrahmens 30 der Fügestation 16 auf einem Lagerbock 37 verschwenkbar aufgenommen. Der Schwenkrahmen 17 kann ferner so ausgestaltet sein, dass eine Rotation der Hecksektion 18 um eine Längsachse 38 der Hecksektion 18 herum möglich ist. Infolge dieser optionalen Rotationsmöglichkeit können beispielsweise auch in bereits an der Hecksektion 18 befindliche Höhenleitwerksbeschläge Bohrungen mit hoher Präzision eingebracht werden.

Nach der Integration des Druckschotts 25 in den Anschlussbereich 35 der Hecksektion 18 kann diese wiederum mittels des Schwenkrahmens 17 in eine horizontale Position verbracht werden. In dieser Position können dann beispielsweise in die im Vormontageplatz 11 befestigten Seitenleitwerksbeschläge mittels der kombinierten Bohr- und Nieteinrichtung 23 Bohrungen mit hoher Genauigkeit gebohrt werden. Darüber hinaus können auch in der Fügestation 16 noch weitere Ausrüstungsarbeiten an der Hecksektion 18 vorgenommen werden. Alternativ kann das Bohren der Beschläge auch zeitlich vor der Integration des Druckschotts 25 in den Anschlussbereich 35 der Hecksektion 18 erfolgen.

Sämtliche Komponenten der vorstehend beschriebenen Kalotten- bzw. Druckschottmontagevorrichtung, insbesondere die bevorzugt kombiniert ausgeführte Bohr- und Nieteinrichtung 15, die vorzugsweise kombinierte Bohr- und Nieteinrichtung 19 in Portalbauweise, das Werkzeug 23 der Portalbohreinrichtung 19, die Hebeeinrichtung und der Schwenkrahmen 17 in der Fügestation 16, werden mittels einer in der Zeichnung nicht dargestellten komplexen Steuer- und Regelungseinrichtung kontrolliert, so dass ein weitgehend personalfreier, vollautomatischer sowie zeit- und kostensparender Betrieb möglich ist. Anstelle der Portalbauweise der Bohreinrichtung 19 können auch standardisierte Knickarmroboter mit mindestens sechs Freiheitsgraden zur Führung der innerhalb des Druckschottbauplatzes 14 und der Fügestation 16 erforderlichen Bohr- und Nietwerkezeuge eingesetzt werden.

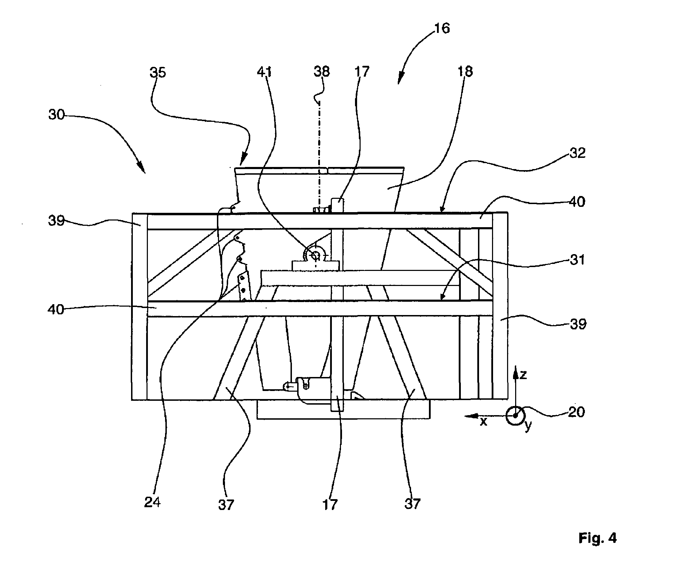

Die **Fig. 4** veranschaulicht eine vereinfachte Seitenansicht der Fügestation mit der in den Schwenkrahmen aufgenommenen Hecksektion, wobei die Portalbohreinrichtung der besseren zeichnerischen Übersicht halber nicht eingezeichnet ist. In der in Fig. 4 dargestellten vertikalen Position der Hecksektion 18 erfolgt verfahrensgemäß der Einbau des Druckschotts.

Der Gestellrahmen 30 der Fügestation 16 ist mit einer Vielzahl von Vertikalstreben 39 gebildet, die mit mehreren Horizontalstreben 40 als Auflage für die Arbeitsebenen 31,32 dienen und zur Aussteifung fachwerkartig verbunden sind. Innerhalb des Gestellrahmens 30 ist der Schwenkrahmen 17 auf dem Lagerbock 37 und einem weiteren, jedoch verdeckten Lagerbock um eine Drehachse 41, die parallel zur y-Achse des Koordinatensystems 20 verläuft, verschwenkbar gelagert. Hierüber hinausgehend erlaubt der Schwenkrahmen 17 in vorteilhafter Weise zusätzlich eine vollständige Rotation der Hecksektion 18 um die Längsachse 38. In der dargestellten Position wird das gleichfalls nicht dargestellte Druckschott 25 mit dem Anschlussbereich 35 der Hecksektion 18 verbunden.

Wird die Hecksektion 18 um die x-Achse um etwa 90° nach rechts verschwenkt, liegen die Seitenleitwerksbeschläge 24 leicht von oben zugänglich in einer oberen Position, so dass Bohrungen in die Seitenleitwerksbeschläge mit der notwendigen Genauigkeit mittels der in dieser Fig. 4 nicht dargestellten Portalbohreinrichtung 19 eingebracht werden können. Durch das Verdrehen der Hecksektion 18 um die Längsachse 38 um einen Drehwinkel von ± 90° können gegebenenfalls auch bereits seitlich an der Hecksektion 18 befestigte Höhenleitwerksbeschläge in diese Bohrposition gebracht und mit hoher Genauigkeit mittels der Portalbohreinrichtung 19 gebohrt werden.

### Bezugszeichenliste

- 1: Hecksektion
- 2: Querstoßlasche
- 3: Anschlussbereich (Hecksektion)
- 4: nachfolgende Rumpfsektion
- 5: Druckschott
- 6: Randwinkel (Druckschott)
- 7: Ringspant
- 8: Niet
- 9: Endbereich (Hecksektion)
- 10: Vorrichtung
- 11: Vormontageplatz
- 12: Horizontalablage
- 13: Hecksektion
- 14: Druckschottbauplatz
- 15: Bohr- und Nieteinrichtung (Druckschottbauplatz)
- 16: Fügestation
- 17: Schwenkrahmen
- 18: Hecksektion
- 19: Portalbohreinrichtung
- 20: Koordinatensystem
- 21: Schiene
- 22: Schiene
- 23: Werkzeug (Portalbohreinrichtung)
- 24: Seitenleitwerksbeschlag
- 25: Druckschott
- 26: Auflager (Druckschott)
- 27: Randwinkel
- 28: Puffer
- 29: Auflager (Druckschott)
- 30: Gestellrahmen
- 31: Arbeitsebene (untere)
- 32: Arbeitsebene (obere)
- 33: Klappe
- 34: Klappe
- 35: Anschlussbereich (Hecksektion)
- 36: Querstoßlasche (Hecksektion)
- 37: Lagerbock (Schwenkrahmen)
- 38: Längsachse (Hecksektion)
- 39: Vertikalstrebe
- 40: Horizontalstrebe
- 41: Schwenkachse (Hecksektion)

## Patentansprüche

1. Verfahren zur Montage eines insbesondere kalottenförmigen Druckschotts (5,25) an einer einstückigen, im Wesentlichen konischen Hecksektion (1,13,18) für ein Flugzeug, wobei die Hecksektion (1,13,18) einen Anschlussbereich (3,35) und einen Endbereich (9) aufweist, umfassend die Schritte:
a) waagerechte Aufnahme einer vorgefertigten Hecksektion (1,13,18) in einer Horizontalablage (12),
b) Einbringen der Hecksektion (1,13,18) in einen Schwenkrahmen (17),
c) Verschwenken der Hecksektion (1,13,18) mittels des Schwenkrahmens (17) in eine senkrechte Position, wobei der Anschlussbereich (3,35) der Hecksektion (1,13,18) nach oben weist,
d) waagerechtes Auflegen und Zentrieren des Druckschotts (5,25) auf dem Anschlussbereich (3,35), und
e) Zusammenfügen des Druckschotts (5,25) mit der Hecksektion (1,13,18) im Bereich des Anschlussbereichs (3,35).

2. Verfahren nach Patentanspruch 1, **dadurch gekennzeichnet, dass** das Zusammenfügen des Druckschotts (5,25) mit der Hecksektion (1,13,18) insbesondere durch Nieten, Schrauben, Schweißen, Pressen, Kleben oder eine beliebige Kombination hiervon erfolgt.

3. Verfahren nach Patentanspruch 1 oder 2, **dadurch gekennzeichnet, dass** nach der Aufnahme der Hecksektion (1,13,18) in der Horizontalablage (12) mindestens ein Beschlag, insbesondere ein Seitenleitwerksbeschlag (24), an der Hecksektion (1,13,18) befestigt wird.

4. Verfahren nach einem der Patentansprüche 1 bis 3, **dadurch gekennzeichnet, dass** ein Ringspant (7) in einem Ringspantbauplatz durch das Zusammenfügen von mehreren Ringspantsegmenten mittels Ringspantkupplungen vorgefertigt wird.

5. Verfahren nach einem der Patentansprüche 1 bis 4, **dadurch gekennzeichnet, dass** das Druckschott (5,25) in einem Druckschottbauplatz (14) mit einem mit mehreren Randwinkelsegmenten gebildeten Randwinkel (6,27) verbunden wird.

6. Verfahren nach Patentanspruch 5, **dadurch gekennzeichnet, dass** zunächst eine mit mehreren Querstoßlaschensegmenten gebildete Querstoßlasche (2,36) mit dem Anschlussbereich (3,35) der Hecksektion (1,13,18) verbunden wird und anschließend das mit dem Randwinkel (6,27) versehene Druckschott (5,25) zentriert und mit der Querstoßlasche (2,36) verbunden wird.

7. Verfahren nach Patentanspruch 5 oder 6, **dadurch gekennzeichnet, dass** der Ringspant (7) waagerecht auf das Druckschott (5,25) aufgelegt und eingepasst wird.

8. Verfahren nach einem der Patentansprüche 5 bis 7, **dadurch gekennzeichnet, dass** die Querstoßlasche (2,36), der Randwinkel (6,27) und der Ringspant (7) miteinander zusammengefügt werden.

9. Verfahren nach einem der Patentansprüche 1 bis 8, **dadurch gekennzeichnet, dass** eine Vielzahl von Bohrungen mittels mindestens einer Bohreinrichtung, insbesondere mittels mindestens einer Portalbohreinrichtung (19), eingebracht wird.

10. Verfahren nach einem der Patentansprüche 1 bis 9, **dadurch gekennzeichnet, dass** in mindestens zwei Hecksektionen (1,13,18) jeweils ein Druckschott (5,25) gleichzeitig integriert wird.

11. Vorrichtung (10) zur Durchführung des Verfahrens nach einem der Patentansprüche 1 bis 10, umfassend
a) mindestens einen Vormontageplatz (11) mit mindestens einer Horizontalablage (12) sowie mindestens eine Fügestation (16) mit mindestens einem Schwenkrahmen (17),
b) mindestens eine Bohreinrichtung, insbesondere mindestens eine Portalbohreinrichtung (19), und
c) mindestens einen Druckschottbauplatz (14).

12. Vorrichtung (10) nach Patentanspruch 11, **dadurch gekennzeichnet, dass** die mindestens eine Portalbohreinrichtung (19) oberhalb oder unterhalb des mindestens einen Schwenkrahmens (17) angeordnet ist.

13. Vorrichtung (10) nach Patentanspruch 11 oder 12, **dadurch gekennzeichnet, dass** mindestens eine Hebeeinrichtung zur freien Positionierung der mindestens einen Hecksektion (1,13,18) im Raum vorgesehen ist.

14. Vorrichtung (10) nach einem der Patentansprüche 11 bis 13, **dadurch gekennzeichnet, dass** die Vorrichtung mindestens einen Ringspantbauplatz aufweist, in dem die Integration eines Ringspants (7) durch das Zusammenfügen von mindestens zwei Ringspantsegmenten mittels Ringspantkupplungen erfolgt.

## Claims

1. Method for amounting an in particular dome-shaped pressure bulkhead (5, 25) on a single-piece, substantially conical tail section (1, 13, 18) for an aircraft, the tail section (1, 13, 18) comprising an attachment region (3, 35) and an end region (9), comprising the steps of:
a) horizontally receiving a prefabricated tail section (1, 13, 18) in a horizontal storage compartment (12),
b) introducing the tail section (1, 13, 18) into a pivot frame (17),
c) pivoting the tail section (1, 13, 18) into a vertical position, in which the attachment region (3, 35) of the tail section faces upwards, by means of the pivot frame (17),
d) horizontally positioning and centring the pressure bulkhead (5, 25) on the attachment region (3, 35), and
e) joining the pressure bulkhead (5, 25) together with the tail section (1, 13, 18) in the region of the attachment region (3, 35).

2. Method according to claim 1, **characterised in that** the pressure bulkhead (5, 25) is joined together with the tail section (1, 13, 18) in particular by riveting, screwing, welding, pressing, bluing or any desired combination thereof.

3. Method according to either claim 1 or claim 2, **characterised in that**, after the tail section (1, 13, 18) has been received in the horizontal storage compartment (12), at least one bracket, in particular a rudder unit bracket (24), is fixed to the tail section (1, 13, 18).

4. Method according to any one of claims 1 to 3, **characterised in that** an annular former (7) is prefabricated at an annular former construction site by joining together a plurality of annular former segments by means of annular former couplings.

5. Method according to any one of claims 1 to 4, **characterised in that** the pressure bulkhead (5, 25) is connected to an edge angle (6, 27), which is formed with a plurality of edge angle segments, at a pressure bulkhead construction site. (14).

6. Method according to claim 5, **characterised in that** initially, a transverse butt strap (2, 36), which is formed from a plurality of transverse butt strap segments, is connected to the attachment region (3, 35) of the tail section (1, 13, 18), and subsequently, the pressure bulkhead (5, 25) which is provided with the edge angle (6, 27) is centred and connected to the transverse butt strap (2, 36).

7. Method according to either claim 5 or claim 6, **characterised in that** the annular former (7) is positioned horizontally on the pressure bulkhead (5, 25) and fitted into place.

8. Method according to any one of claims 5 to 7, **characterised in that** the transverse butt strap (2, 36), the edge angle (6, 27) and the annular former (7) are joined together.

9. Method according to any one of claims 1 to 8, **characterised in that** a plurality of holes are made by means of at least one drilling means, in particular by means of a gantry drilling means (19).

10. Method according to any one of claims 1 to 9, **characterised in that** a pressure bulkhead (5, 25) is integrated into each of at least two tail sections (1, 13, 18) simultaneously.

11. Device (10) for carrying out the method according to any one of claims 1 to 10, comprising:
a) at least one prefabrication site (11) having at least one horizontal storage compartment (12) and at least one joining station (16) having at least one pivot frame (17),
b) at least one drilling means, in particular at least one gantry drilling means (19), and
c) at least one pressure bulkhead construction site (14).

12. Device (10) according to claim 11, **characterised in that** the at least one gantry drilling means (19) is arranged above or below the at least one pivot frame (17).

13. Device (10) according to either claim 11 or claim 12, **characterised in that** at least one lifting means is provided for freely positioning the at least one tail section (1, 13, 18) in space.

14. Device (10) according to any one of claims 11 to 13, **characterised in that** the device comprises at least one annular former construction site, at which an annular former (7) is integrated by joining together at least two annular former segments by means of annular former couplings.

## Revendications

1. Procédé de montage d'une cloison de pressurisation (5, 25) notamment en forme de dôme dans une partie arrière (1, 13, 18) monobloc sensiblement conique pour un avion, la partie arrière (1, 13, 18) présentant une zone de raccordement (3, 35) et une zone terminale (9), comprenant les étapes suivantes :
a) réception horizontale d'une partie arrière (1, 13, 18) préfabriquée dans un support horizontal (12),
b) mise en place de la partie arrière (1, 13, 18) dans un cadre pivotant (17),
c) pivotement de la partie arrière (1, 13, 18) en position verticale au moyen du cadre pivotant (17), la zone de raccordement (3, 35) de la partie arrière (1, 13, 18) étant orientée vers le haut,
d) pose à l'horizontale et centrage de la cloison de pressurisation (5, 25) sur la zone de raccordement (3, 35), et
e) assemblage de la cloison de pressurisation (5, 25) avec la partie arrière (1, 13, 18) dans la zone de raccordement (3, 35).

2. Procédé selon la revendication 1, **caractérisé par le fait que** l'assemblage de la cloison de pressurisation (5, 25) avec la partie arrière (1, 13, 18) est réalisé en particulier par rivets, vis, soudage, compression, collage ou par leur quelconque combinaison.

3. Procédé selon la revendication 1 ou 2, **caractérisé par le fait que**, après la réception de la partie arrière (1, 13, 18) dans le support horizontal (12), au moins une armature, en particulier une armature d'empennage latéral (24), est fixée à la partie arrière (1, 13, 18).

4. Procédé selon l'une des revendications 1 à 3, **caractérisé par le fait qu'**un raidisseur annulaire (7) est préfabriqué dans un emplacement de raidisseur annulaire par l'assemblage de plusieurs segments de raidisseur annulaire au moyen d'accouplements de raidisseurs annulaires.

5. Procédé selon l'une des revendications 1 à 4, **caractérisé par le fait que** la cloison de pressurisation (5, 25) est reliée dans un emplacement de cloison de pressurisation (14) avec une équerre de contact (6, 27) formée de plusieurs segments d'équerre de contact.

6. Procédé selon la revendication 5, **caractérisé par le fait qu'**une éclisse de jonction (2, 36) formée de plusieurs segments d'éclisse de jonction est d'abord reliée à la zone de raccordement (3, 35) de la partie arrière (1, 13, 18), puis la cloison de pressurisation (5, 25) pourvue de l'équerre de contact (6, 27) est centrée et reliée à l'éclisse de jonction (2, 36).

7. Procédé selon la revendication 5 ou 6, **caractérisé par le fait que** le raidisseur annulaire (7) est posé et adapté à l'horizontale sur la cloison de pressurisation (5, 25).

8. Procédé selon l'une des revendications 5 à 7, **caractérisé par le fait que** l'éclisse de jonction (2, 36), l'équerre de contact (6, 27) et le raidisseur annulaire (7) sont assemblés entre eux.

9. Procédé selon l'une des revendications 1 à 8, **caractérisé par le fait qu'**une pluralité de perçages sont aménagés au moyen d'un dispositif de perçage, en particulier au moins au moyen d'un dispositif de perçage de type portique (19).

10. Procédé selon l'une des revendications 1 à 9, **caractérisé par le fait qu'**une cloison de pressurisation (5, 25) est intégrée simultanément chacune dans au moins deux parties arrière (1, 13, 18).

11. Dispositif (10) pour la réalisation du procédé selon l'une des revendications 1 à 10, comprenant :
a) au moins un emplacement de montage préalable (11) comportant au moins un support horizontal (12) ainsi qu'au moins une station d'assemblage (16) comportant au moins un cadre pivotant (17),
b) au moins un dispositif de perçage, en particulier au moins un dispositif de perçage de type portique (19), et
c) au moins un emplacement de cloison de pressurisation (14).

12. Dispositif (10) selon la revendication 11, **caractérisé par le fait que** l'au moins un dispositif de perçage de type portique (19) est disposé en dessus ou en dessous de l'au moins un cadre pivotant (17).

13. Dispositif (10) selon la revendication 11 ou 12, **caractérisé par le fait qu'**au moins un dispositif de levage est prévu pour le libre positionnement de l'au moins une partie arrière (1, 13, 18) dans l'espace.

14. Dispositif (10) selon l'une des revendications 11 à 13, **caractérisé par le fait que** le dispositif présente au moins un emplacement de raidisseur annulaire, dans lequel l'intégration d'un raidisseur annulaire (7) est réalisé par l'assemblage d'au moins deux segments de raidisseur annulaire au moyen d'accouplements de raidisseurs annulaires.
